# EUROPÄISCHE PATENTSCHRIFT

(11) **EP 3 410 978 B1**
(45) Veröffentlichungstag und Bekanntmachung des Hinweises auf die Patenterteilung: **29.04.2020**
(21) Anmeldenummer: 17705810.4
(22) Anmeldetag: 03.02.2017
(51) Int. Cl.: A61C 3/025, B24C 7/00

(54) **PULVERKAMMER**
POWDER CHAMBER
CHAMBRE À POUDRE

(30) Priorität: 04.02.2016 DE 102016201693
(43) Veröffentlichungstag der Anmeldung: 12.12.2018
(73) Patentinhaber: Ferton Holding S.A., 2800 Delémont (CH)
(72) Erfinder: DONNET, Marcel, 01630 St Jean de Gonville (FR)
(74) Vertreter: Müller Schupfner & Partner Patent- und Rechtsanwaltspartnerschaft mbB
(86) Internationale Anmeldenummer: PCT/EP2017/052424
(87) Internationale Veröffentlichungsnummer: WO 2017/134242

(56) Entgegenhaltungen:
- EP-A1- 0 119 021
- EP-A1- 2 193 758
- DE-B1- 1 773 414
- US-A- 3 704 811
- US-A- 5 181 349
- US-B1- 9 050 704

## Beschreibung

Die vorliegende Erfindung betrifft eine Pulverkammer, insbesondere für oder von einem dentalen Pulverstrahlgerät.

Bei dentalen Pulverstrahlgeräten oder auch dentalen Abrasivstrahlgeräten wird ein in einem Behälter bzw. einer Pulverkammer bevorratetes Dentalpulver gemeinsam mit einem gasförmigen Trägermedium (beispielsweise Luft) an eine Düsenanordnung eines über eine Ableitung angeschlossenen Handstücks, in der Regel unter Beimischung von unter Druck stehenden Wassers, angeliefert. Gemäß einer ersten bekannten Pulverkammer-Bauform wird Luft von oben in die Pulverkammer geführt, gemäß einer zweiten Variante wird die Luft von unten in die Pulverkammer geleitet. Besonders die zweite Art, die zum Beispiel in der EP 2 193 758 B1 ausführlich beschrieben ist, zeichnet sich durch einen sehr gleichmäßigen Pulver-/Luftgemisch-Strom aus.

Problematisch ist allerdings, dass sich das Pulver bzw. die Pulverteilchen durch die Reibung aneinander bzw. an der Kammerwand in der Pulverkammer elektrostatisch aufladen. Dabei kann die elektrostatische Aufladung so hoch werden, dass das Pulver nicht mehr ausreichend rieselfähig ist. Ein gleichmäßiger Strom von Pulver-/Luftgemisch, welcher für eine effektive und schonende Zahnreinigung erforderlich ist, ist dann nicht mehr gewährleistet. Dieser Effekt tritt insbesondere bei Pulvern mit kleinen Partikelgrößen, z. B. in einem Bereich kleiner als 12-25 µm, auf. Mit der klinischen Entwicklung hin zu feineren und leichteren Pulvern nimmt daher der Einfluss durch elektrostatische Aufladung zu. Während bei den bekannten, größeren Pulvern mit einem mittleren Durchmesser von etwa 65 µm und einer Dichte von über 2 g/cm³ dieses Problem vernachlässigbar ist, kann bei neueren Pulvern, wie z. B. aus Erythritol, mit einer Dichte von ca. 1,45 g/cm³ und einem mittleren Teilchendurchmesser von etwa 12 µm in marktüblichen Pulverstrahlgeräten die Verwirbelung des Pulvers in der Pulverkammer durch elektrostatische Kräfte zum Erliegen kommen.

In der EP 2 193 758 B1 wurde versucht, diesem Problem durch die Form der Pulverkammer entgegenzuwirken. In der EP 0 119 021 B2 werden Pulver verwendet, welche entsprechend groß sind (> 80 µm).

Die DE 1 773 414 beschäftigt sich ebenfalls mit der Problematik und schlägt ein Vakuum-Dosier- und Mischgerät für feinpulvrige, sich elektrostatisch aufladende, Materialien, vorzugsweise Dentalmaterialien, vor, bestehend aus Vorratsbehältern für das zu dosierende Gut, an deren unteren, vorzugsweise gegenüber dem Behälterquerschnitt verjüngten, Ausflussöffnungen, Dosierkammern angeordnet sind, die als Ausnehmungen einer Dosierwalze ausgebildet sind, wobei der Boden der Dosierkammern für das sich elektrostatisch aufladende Pulver luftdurchlässig ausgebildet ist. Über den Aufbau einer Druckdifferenz soll der elektrostatischen Aufladung des Pulvers entgegengewirkt werden. Diese Lösung ist allerdings technisch aufwendig und beseitigt nicht die eigentliche Ursache des Problems, nämlich die elektrostatische Aufladung. Eine weitere Pulverkammer ist aus der US 9 050 704 B1 bekannt.

Es ist daher Aufgabe der vorliegenden Erfindung, eine Pulverkammer anzugeben, welche die vorgenannten Nachteile beseitigt. und eine einfache und kostengünstige Möglichkeit bereitstellt, eine bestmögliche Rieselfähigkeit des Pulvers in einer Pulverkammer aufrechtzuerhalten.

Diese Aufgabe wird durch eine Pulverkammer gemäß Anspruch 1 gelöst. Weitere Vorteile und Merkmale ergeben sich aus den Unteransprüchen sowie der Beschreibung und den beigefügten Figuren.

Erfindungsgemäß weist eine Pulverkammer, insbesondere für ein oder von einem dentalen Pulverstrahlgerät, zumindest einen Leitbereich auf, welcher elektrisch leitfähig ausgebildet ist, wobei der zumindest eine Leitbereich eine Kontaktfläche aufweist, welche innerhalb der Pulverkammer ausgebildet bzw. angeordnet ist. Die Pulverkammer ist ausgelegt, in ihrem Inneren bzw. innerhalb, ein Pulver, wie es für die dentale Pulverstrahlreinigung verwendet wird, aufzunehmen bzw. zu bevorraten. Zudem weist die Pulverkammer zweckmäßigerweise einen Einlass für (Druck-)Luft sowie einen Auslass für das Pulver-/Luftgemisch auf. Die Pulverkammer dient also nicht nur als reiner "Pulverspeicher" sondern vor allem auch dazu, ein möglichst gleichmäßiges Pulver-/Luftgemisch, wie es für die Zahnreinigung benötigt wird, bereitzustellen. Im Inneren der Pulverkammer bzw. innerhalb ist nun mit Vorteil die elektrisch leitende Kontaktfläche ausgebildet bzw. angeordnet.

Der elektrisch leitfähige Leitbereich bzw. die Kontaktfläche bewirken, dass bestehende elektrostatische Ladungen zum einen kontrolliert abgeleitet werden können und zum anderen dass die in der Regel durch Reibungselektrizität entstehenden Aufladungen verhindert werden können. Ursache der elektrostatischen Aufladung der Pulverteilchen ist insbesondere die Reibungselektrizität, welche einen Spezialfall der Berührungselektrizität darstellt. Beim Verwirbeln der Pulverteilchen in der Pulverkammer stoßen die Pulverteilchen aneinander - "reiben sich" - und laden sich elektrostatisch auf. Wenn sie die Wand der Pulverkammer berühren bzw. auf sie stoßen, tritt der gleiche Effekt auf. Bei herkömmlichen Pulverkammern gibt es keine Möglichkeit, die elektrostatische Aufladung abzubauen, da die Wände der bekannten Pulverkammern oft aus Kunststoffen gefertigt sind, welche isolierend wirken. Auch sonst sind keine entsprechenden Vorrichtungen vorhanden, um dem Problem der elektrostatischen Aufladung des Pulvers entgegenzuwirken. Auch wenn sichergestellt wird, dass das Pulver, das in der Pulverkammer ist, entladen ist, beispielsweise indem beim Befüllen der Pulverkammer metallische Leitungen/Vorrichtungen verwendet werden, verhindert dies nicht, dass durch die bereits beschriebenen Effekte eine erneute Aufladung entsteht. Die Folge ist, dass das Pulver in der Pulverkammer verklumpt oder an den Wänden der Pulverkammer anhaftet, was dessen Verwirbelung erschwert oder sogar unmöglich macht. Ein daraus resultierendes Problem ist insbesondere, dass der Pulverstrom bzw. das Pulver-/Luftgemisch nicht mehr ausreichend geregelt bzw. reguliert werden kann. Zudem verbleibt eine größere Menge an Pulverresten in der Pulverkammer, die nicht ausgebracht werden kann.

Indem nun die Pulverkammer den Leitbereich bzw. die Kontaktfläche aufweist, kann dieser im Stand der Technik bestehende Nachteil effizient behoben werden. Konkret können also bestehende elektrische bzw. elektrostatische Ladungen der Pulverteilchen abgeleitet werden und es kann verhindert werden, dass sich die umherfliegenden Pulverteilchen überhaupt in nennenswertem Maße elektrisch aufladen, dadurch dass innerhalb der Pulverkammer die Kontaktfläche des Leitbereichs angeordnet ist. Diese ist nämlich mit Vorteil so dimensioniert, positioniert und ausgebildet, dass sie von den herumwirbelnden Pulverteilchen "getroffen" wird. So kann sie deren elektrische Ladungen aufnehmen und über den Leitbereich abführen. Damit kann äußerst effektiv ein Verblocken des Pulvers bzw. ein Verstopfen der Pulverkammer, insbesondere bei Verwendung feiner Pulver mit einem mittleren Teilchendurchmesser von weniger als etwa 50 µm, also z. B. etwa 12-25 µm oder sogar kleiner, vermieden werden. In einer derartigen Pulverkammer können ohne Probleme moderne Pulver, wie z. B. aus oder umfassend Erythritol mit einer Dichte von etwa 1,45 g/cm³ und einem mittleren Teilchendurchmesser von etwa 12 µm eingesetzt werden, ohne dass es zu einem Verblocken kommt.

Gemäß verschiedener Ausführungsformen weist die Kontaktfläche einen spezifischen Oberflächenwiderstand in einem Bereich von etwa 10¹² bis 10² Ω, bevorzugt unterhalb von 10⁹ Ω, auf. Der Oberflächenwiderstand von Werkstoffen und der Ableitwiderstand von Einrichtungen gegenüber einem Bezugspotential (z. B.: Erde) haben einen entscheidenden Einfluss auf den ESD-Schutz (Electrostatic Discharge). Durch Reibung an Körpern kommt es zur Aufladung. Werkstoffe, die einen ausreichend niedrigen Oberflächenwiderstand besitzen, sorgen dafür, dass zum einen die Höhe der Aufladespannung minimiert wird und zum anderen die elektrostatische Aufladung wieder abgebaut werden kann. Der Ableitwiderstand von Einrichtungen sorgt dafür, dass elektrostatische Aufladungen gegen das Bezugspotential Erde abfließen können und somit keine unzulässig hohen Aufladungen entstehen können. Der Ableitwiderstand kann also hohe Spannungen kontrolliert abbauen. Hierfür kann der Leitbereich z. B. hochohmige (100 kΩ - 1 MΩ) Widerstände umfassen, die je nach Bedarf in Reihe oder parallel zur Spannungsquelle geschaltet werden. Durch den hohen Widerstand wird ein plötzlicher Stromstoß vermieden und die vorhandene Energie baut sich langsam ab. Bevorzugt ist die Kontaktfläche statisch ableitend bzw. antistatisch, statisch leitfähig, leitfähig oder sogar leitend ausgebildet. Als statisch ableitend werden Materialien bezeichnet, die einen Oberflächenwiderstand zwischen 10⁹ bis 10¹² Ω aufweisen. Materialien mit einem Oberflächenwiderstand in einem Bereich von 10⁶ bis 10⁹ Ω werden als statisch leitfähig bezeichnet. Materialien mit einem Oberflächenwiderstand zwischen 10² bis 10⁵ Ω werden als leitfähig bezeichnet und Materialien mit einer Leitfähigkeit von 10⁴ bis 10² Ω werden als leitend bezeichnet.

Beispielsweise ist ein Teil oder Abschnitt der Innenwand der Pulverkammer als Kontaktfläche ausgebildet oder weist diese auf. Ggf. könnte die ganze Innenwand der Pulverkammer als Kontaktfläche ausgebildet sein bzw. diese ausbilden.

Vorstellbar ist auch, dass die Kontaktfläche bzw. die Leitfläche beabstandet von der Innenwand der Pulverkammer angeordnet ist. Beispielsweise ist die Leitfläche unmittelbar vor oder in einem festgelegten Abstand zu einer Austrittsöffnung, aus der das Pulver tritt, angeordnet.

Während der Kontaktbereich dahingehend ausgebildet ist, von den herumwirbelnden Pulverteilchen berührt zu werden, dient der Leitbereich vorwiegend dazu, die elektrische Ladung weg- oder abzuleiten bzw. abzubauen. Der Kontakt- und der Leitbereicht können mehrteilig, insbesondere zweiteilig aber auch einteilig ausgebildet sein. Der Durchgangswiderstand liegt dabei in einem für die verwendeten Materialien üblichen Bereich. Als Materialien für den Leitbereich können verschiedenste Metalle, wie Aluminium, Stahl, Kupfer und dergleichen verwendet werden. Bevorzugt sind aber vor allem modifizierte Kunststoffe, welche die oben genannten Oberflächenwiderstände aufweisen, wobei geeignete Basismaterialien beispielsweise Polyoxymethylen (POM) oder Polyethylen (PE) sind. Zur Steigerung der Leitfähigkeit kann den Kunststoffen zum Beispiel Graphit beigegeben werden. Zur Modifizierung der Leitfähigkeit können weiter die folgenden Werkstoffe beigegeben oder verwendet werden: Ruß, Kohlefaser, Graphit, Metallpulver, Stahlfasern und/oder nanoskalige Fasern. Es hat sich als ausreichend erwiesen, wenn der Kontaktbereich zumindest statisch ableitend ausgebildet ist, also einen Oberflächenwiderstand zwischen 10⁹ bis 10¹² Ω aufweist. Eine Leitfähigkeit, wie z. B. von Metallen, ist in der Regel nicht nötig. Der Leitbereich kann ein Kabel oder eine Leitung sein bzw. eine solche umfassen. Der Leitbereich kann aber auch durch einen Teil oder Abschnitt der Pulverkammer selbst geformt/gebildet sein. Gemäß einer Ausführungsform kann die Pulverkammer eine Vielzahl von Leitbereichen umfassen (beispielsweise 2, 3, 4, 5, 6 oder mehr), welche ggf. untereinander elektrisch leitend verbunden sind. Die Leitbereiche sind dann z. B, an verschiedenen Orten in/an der Pulverkammer angeordnet bzw. ausgebildet, beispielsweise seitlich, oben und unten etc.

Grundsätzlich versteht der Fachmann unter einem modifizierten Kunststoff einen solchen Kunststoff, der durch Hinzugabe eines Zusatzmaterials elektrisch leitfähig ist. Insbesondere ist es vorgesehen, dass durch die Zugabe des Zusatzmaterials die elektrische Leitfähigkeit gezielt eingestellt wird, vorzugsweise abhängig von der Partikelgröße des vorgesehenen Pulvers in der Pulverkammer eingestellt wird. Besonders bevorzugt ist es vorgesehen, dass der Leiterbereich und/oder der Kontaktbereich zumindest größtenteils, d. h. zu mehr als 70 %, bevorzugt zu mehr als 80 % und besonders bevorzugt zu mehr als 90 % aus einem modifizierten Kunststoff gefertigt ist.

Gemäß einer Ausführungsform umfasst die Pulverkammer eine Kammerwand, welche aus einem nichtmetallischen Werkstoff, insbesondere einem transparenten Kunststoff, gefertigt ist, wobei bevorzugt ein Abschnitt der Kammerwand als Leitbereich ausgebildet ist. Ggf. kann sogar die ganze Pulverkammer als Leitbereich ausgebildet sein. An dieser Stelle sei erwähnt, dass es sich bei der Pulverkammer um eine Pulverkammer handeln kann, welche an einem Pulverstrahlgerät anordenbar ist und z. B. ausgetauscht werden kann (beispielsweise, wenn sie leer ist). Es kann sich aber auch um eine Pulverkammer handeln, welche fest in einem Pulverstrahlgerät integriert ist. Bevorzugt ist die Kammerwand aus dem transparenten Werkstoff, insbesondere dem transparenten Kunststoff gefertigt, da dann leicht der Pulverfüllstand und die ordnungsgemäße Vermischung überwacht werden kann.

Gemäß einer bevorzugten Ausführungsform ist die Pulverkammer austauschbar ausgebildet und weist eine im Wesentlichen flaschenförmige Gestalt auf, umfassend z. B. einen im Wesentlichen zylindrischen, rotationssymmetrischen Hohlkörper, welcher einen Deckel oder Verschluss aufweist, über welchen ein Befüllen mit Pulver möglich ist. Gemäß einer Ausführungsform muss auch nicht die ganze Pulverkammer transparent ausgebildet sein sondern beispielsweise nur ein, sich bevorzugt entlang der Hochachse erstreckender, schlitzförmiger Bereich, welcher derart gestaltet ist, dass ein Pulverfüllstand überwacht werden kann.

Gemäß einer Ausführungsform umfasst der Leitbereich einen Anschlussbereich, welcher ausgelegt ist, den Leitbereich zu erden. Damit wird sichergestellt, dass auch der Leitbereich selbst seine elektrische Ladung abgeben bzw. weiterleiten kann. Hierzu ist der Anschlussbereich selbst ebenfalls bevorzugt elektrisch leitfähig ausgebildet. Bevorzugt ist der Anschlussbereich an einer Außenseite der Pulverkammer angeordnet bzw. bildet eine Außenseite der Pulverkammer. Gemäß einer Ausführungsform ist zum Beispiel ein äußerer Abschnitt an einer Außenseite der Pulverkammer als Anschlussbereich ausgebildet. Der Leitbereich erstreckt sich zweckmäßigerweise über eine komplette Wandstärke der Kammerwand und umfasst gleichzeitig die Kontaktfläche, welche innerhalb der Pulverkammer ausgebildet ist und den Anschlussbereich, welcher außerhalb der Pulverkammer angeordnet ist. Anders formuliert ist gemäß dieser Variante zumindest ein Abschnitt der Kammerwand der Leitbereich.

Wie bereits angedeutet, weißt die Pulverkammer zweckmäßigerweise einen Verschluss zum Verschließen der Pulverkammer auf, wobei der Verschluss gemäß einer bevorzugten Ausführungsform den Leitbereich aufweist oder formt bzw. als dieser ausgebildet ist. Bevorzugt ist also eine Pulverkammer mit einem ESD-Verschluss. Der Verschluss hat sich als ideal erwiesen, da dieser nicht transparent ausgebildet sein muss und ein zusätzliches Bauteil darstellt, welches leicht ausgetauscht oder ergänzt werden kann. Bekannte Pulverkammern können also einfach und kostengünstig nachgerüstet werden. Die Beigabe von Stoffen zur Steigerung der Leitfähigkeit von Kunststoffen, wie z.B. Graphit oder Kohlefasern vermindern üblicherweise deren transparente Eigenschaften, bei hoher Konzentrationen derartiger Zugaben zur Steigerung der Leitfähigkeit können diese sogar undurchsichtig werden.

Hierbei versteht der Fachmann unter einem Verschluss bevorzugt ein separates Bauteil, das sich reversibel von der Pulverkammer lösen lässt. Eine solche Ausgestaltung erlaubt es nicht nur, den Verschluss regelmäßig auszutauschen, sondern erlaubt es auch, den Leiterbereich als separates Bauteil herzustellen. Vorzugsweise bildet der Leiterbereich der Pulverkammer, insbesondere der Verschluss, einen Anteil zwischen 5 % und 50 %, bevorzugt zwischen 5 % und 35 % und besonderes bevorzugt zwischen 5 % und 10 % des gesamten Volumens der mit dem Verschluss geschlossenen Pulverkammer. Bevorzugt lässt sich der Verschluss mit einem Grundkörper der Pulverkammer verclipsen oder verschrauben.

Besonders bevorzugt ist insbesondere, wenn der Verschluss derart angeordnet ist, dass er von den Pulverteilchen gut getroffen wird, insbesondere auch von denen, die nicht sofort wieder die Pulverkammer verlassen. Bevorzugt ist der Verschluss beispielsweise gegenüber einem Lufteinlass der Pulverkammer oder in einem (bezogen auf eine Hochachse/Längsachse der Pulverkammer) oberen Bereich der Pulverkammer angeordnet.

Gemäß einer Ausführungsform ist der Verschluss aus Kunststoff gebildet und weist einen Kern aus einem elektrisch leitfähigen Material auf, z. B. Metall. Der Kern muss nicht vollständig von Kunststoff umgeben sein, sondern kann die Kontaktfläche ausbilden, wodurch ein direkter Kontakt mit den Pulverteilchen möglich ist. Gleiches gilt für den Anschlussbereich, welcher ebenfalls durch den Kern gebildet sein kann, wodurch ein Erden des Leitbereichs/Kerns ermöglicht wird.

Gemäß einer anderen Ausführungsform, kann der Kern aber auch vollständig von Kunststoff ummantelt sein, wobei dann der Kunststoff selbst die nötigen Eigenschaften der Kontaktfläche des Leitbereichs bereitstellt, also nicht isolierend wirkt, sodass eine Aufladung/Entladung gewährleistet ist.

Gemäß einer weiteren Ausführungsform, weist der Verschluss eine elektrisch leitende Oberfläche auf. Der Leitbereich ist also durch die Oberfläche des Verschlusses gebildet. Ein derartiger Leitbereich kann beispielsweise als Beschichtung ausgebildet sein. Ein so beschaffener Leitbereich kann alternativ auch durch Lackieren oder Bedampfen hergestellt werden.

Nach einer bevorzugten Ausführungsform ist der Verschluss aus einem Kunststoff gebildet, welcher eine Vielzahl elektrisch leitender Partikel aufweist, wodurch dessen Leitfähigkeit gesteigert werden kann. Bevorzugte Kunststoffe bzw. bevorzugte Mittel zur Steigerung der Leitfähigkeit wurden bereits allgemein im Zusammenhang mit dem Leitbereich erwähnt und gelten hier analog und entsprechend.

Gemäß einer weiteren Ausführungsform weist die Pulverkammer eine Prallfläche auf, welche ausgelegt ist, einen Pulverstrahl innerhalb der Pulverkammer ab- und/oder umzulenken, wobei die Prallfläche bevorzugt als Kontaktfläche ausgebildet ist. Wie eingangs erwähnt, gibt es im Wesentlichen zwei Typen von Pulverkammern, wobei bei einer ersten Variante die Luft, insbesondere Druckluft, seitlich in einem oberen Teil der Pulverkammer zugeführt wird, während gemäß einer zweiten, bevorzugten Variante, die Luft von unten in die Pulverkammer geleitet wird. In beiden Fällen weist die Pulverkammer einen entsprechenden Ausgang/Auslass zum Ableiten des Pulver-/Luftgemisches auf. Die Prallfläche dient bevorzugt dazu, den Luft-/ Pulverstrom innerhalb der Pulverkammer um- und/oder abzulenken, beispielsweise in Richtung des Ausgangs oder allgemein etwa quer zu einer Strömungsrichtung, um eine gleichmäßige Verwirbelung zu ermöglichen. Bei der Prallfläche handelt es sich also um ein Bauteil bzw. eine Komponente innerhalb der Pulverkammer, welche besonders häufig mit den herumfliegenden/herumwirbelnden Pulverteilchen in Kontakt kommt. Daher ist es besonders vorteilhaft, wenn die Prallfläche als Leitbereich ausgebildet ist bzw. als Kontaktfläche. Insbesondere durch das Umlenken des Pulvers kann eine hohe elektrische Entladung des Pulvers realisiert werden.

Gemäß einer bevorzugten Ausführungsform, weist der Verschluss die Prallfläche auf. Abhängig davon, wie der Pulverflug innerhalb der Pulverkammer beeinflusst werden soll, ist die Prallfläche zum Beispiel eben, aber auch gewölbt, wie z. B. konkav oder konvex, ausgebildet. Die Oberflächenrauigkeit ist dabei bevorzugt derart gewählt, dass an der Kontaktfläche vorteilhafterweise keine Pulverteilchen haften bleiben, wodurch deren Leitfähigkeit bzw. deren Oberflächenwiderstand negativ beeinflusst werden könnte. Weiter ist die Oberflächenrauigkeit mit Vorteil so gewählt, dass eine optimale Ableitung der elektrischen Ladung von den aufgeladenen Pulverteilchen erfolgt.

Gemäß einer bevorzugten Ausführungsform, umfasst die Pulverkammer ein Führungselement, insbesondere ein Venturirohr, wobei das Führungselement, ausgelegt ist, einen Pulverstrom entlang einer Strömungsrichtung in Richtung der Prallfläche zu leiten. Bei dem Führungselement handelt es sich zweckmäßigerweise um ein rohrförmiges Element, welches sich entlang einer Längsachse/Hochachse der Pulverkammer erstreckt. Unterhalb des Führungselements, in einem gewissen Abstand, ist der Lufteinlass angeordnet. Das Führungselement selbst ist mit Pulver umgeben. Wird nun die Pulverkammer mit (Druck-)Luft beaufschlagt, wird über den Einlass Luft in die Pulverkammer geführt und es wird umliegendes Pulver in das Führungselement gesaugt bzw. mitgerissen. Das Führungselement wiederum leitet dann einen Strom aus Pulver und Luft (der Pulverstrom beträgt gemäß verschiedenen Ausführungsformen 15 bis 20 g/min und mehr) zweckmäßigerweise entlang der Strömungsrichtung, welche der Längsrichtung des Führungselements entspricht, in Richtung der Prallfläche, wo er in geeigneter Weise umgelenkt und mit großem Vorteil gleichzeitig elektrostatisch entladen wird.

Gemäß bevorzugten Ausführungsformen ist die Prallfläche in einem Winkel von etwa 20° bis 90° zur Strömungsrichtung bzw. zum Führungselement orientiert, besonders bevorzugt in einem Winkel von etwa 45° bis 90°.

Zweckmäßigerweise weist die Pulverkammer einen Einsatz auf, innerhalb dessen das Pulver aufbewahrt wird. Der Einsatz ist gemäß einer Ausführungsform geformt und ausgelegt, das Pulver aufzunehmen und bevorzugt in Richtung des (Luft-) Einlasses zu führen oder zu lenken, welcher gemäß bevorzugten Ausführungsformen in einem Bodenbereich oder Bodenelement der Pulverkammer angeordnet ist. Dies wird z. B. dadurch erreicht, dass der Einsatz eine konische Form aufweist, die das Pulver in Richtung eines am Boden der Pulverkammer angeordneten Einlasses führt. In einer bevorzugten Variante weist die Pulverkammer eine zylindrische, rotationssymmetrische Grundform auf und umfasst ein (ggf. abnehmbares) Bodenelement und einen Verschluss. Innerhalb der Pulverkammer ist zweckmäßigerweise der Einsatz angeordnet. Das vorgenannte Führungselement bzw. Venturirohr ist ebenfalls innerhalb der Pulverkammer oder direkt an dem vorgenannten Einsatz angeordnet. Der Einsatz kann ebenfalls elektrisch leitend ausgebildet sein. Hier streicht das Pulver beim Verwirbeln entlang, so dass dieser damit eine besonders geeignete Ableitfläche bildet. Das Bodenelement, welches bevorzugt den vorgenannten Lufteinlass aufweist, kann selbst zweckmäßigerweise austauschbar gestaltet sein. Der Durchmesser der Pulverkammer liegt z. B. in einem Bereich von etwa 7 bis 18 cm, die Höhe (entlang der Längsachse gemessen) in einem Bereich von etwa 10 bis 25 cm.

Zweckmäßigerweise weist die Pulverkammer zumindest einen Befestigungs- und/oder Anordnungsbereich auf, welcher ausgelegt ist, die Pulverkammer zu befestigen und/oder zu arretieren und/oder an einem anderen Bauteil anzuordnen, wobei der Anschlussbereich bevorzugt den Befestigungs- und/oder Anordnungsbereich umfasst, aufweist oder ausbildet. Zweckmäßigerweise ist also der Befestigungs- und/oder Anordnungsbereich ein Teil des Leitbereichs bzw. wird durch diesen gebildet.

Gemäß einer bevorzugten Ausführungsform umfasst der Verschluss den Befestigungs- und/oder Anordnungsbereich bzw. ist als Befestigungs- und/oder Anordnungsbereich ausgebildet. Bei einer derartigen Ausführungsform wird die Pulverkammer mit Vorteil über den Verschluss in einem entsprechenden Pulverstrahlgerät arretiert bzw. verspannt, insbesondere entlang der Längsachse der Pulverkammer. Bei dieser Art der Arretierung wird nicht nur die Pulverkammer als solche arretiert, es wird auch ein sicheres Verschließen der Pulverkammer durch den Druck auf den Verschluss bewirkt. Da der Verschluss zweckmäßigerweise den elektrisch leitfähigen Leitbereich aufweist bzw. als solcher ausgebildet ist, kann sehr einfach eine Erdung des Leitbereichs erfolgen. Ein derartiger Verschluss bzw. Leitbereich weist zweckmäßigerweise sowohl die Kontaktfläche als auch den Anschlussbereich auf, wobei der Anschlussbereich mit Vorteil als Befestigungs- und/oder Anordnungsbereich ausgelegt ist.

Beschrieben wird auch ein Verschluss für eine Pulverkammer eines dentalen Pulverstrahlgeräts, wobei der Verschluss einen elektrisch leitfähigen Leitbereich aufweist oder als solcher ausgebildet ist.

Bevorzugt umfasst der Verschluss auch einen Auslass/Ausgang für ein Pulver bzw. ein Pulver-/Luftgemisch. Gemäß einer bevorzugten Ausführungsform umfasst der Verschluss eine Prallfläche und eine Seitenfläche, welche zylindrisch und/oder konisch zulaufend ausgebildet ist. Die Seitenfläche ist dabei derart ausgebildet, dass sie in einer entsprechenden Öffnung der Pulverkammer angeordnet ist. Insbesondere durch die beispielsweise konische Geometrie können eine leichte Anordnung in der Öffnung sowie eine gute Dichtfunktion bereitgestellt werden. Bevorzugt ist der Auslass in der Seitenfläche angeordnet und verläuft derart, dass er an einer Oberseite des Verschlusses, welche der Prallfläche bevorzugt im Wesentlichen gegenüberliegt, nach außen führt. Ein derartiger Verlauf kann zum Beispiel kostengünstig durch zwei entsprechende Bohrungen realisiert werden.

Im Übrigen gelten für den Verschluss sämtliche Vorteile und Merkmale, welche bereits in Bezug auf die Pulverkammer genannt wurden, analog und entsprechend bzw. umgekehrt.

Hierbei versteht der Fachmann unter einem Verschluss bevorzugt ein separates Bauteil, das sich reversibel von der Pulverkammer lösen lässt. Eine solche Ausgestaltung erlaubt es nicht nur, den Verschluss regelmäßig auszutauschen, sondern erlaubt es auch, den Leiterbereich als separates Bauteil herzustellen.

Beschrieben wird weiter ein Pulverstrahlgerät, insbesondere ein dentales Pulverstrahlgerät bzw. Abrasivstrahlgerät, wobei das Pulverstrahlgerät Mittel zum Erden bzw. zum Potentialausgleich umfasst, wobei die Mittel ausgelegt sind, eine Pulverkammer, welche in oder an dem Pulverstrahlreinigungsgerät angeordnet oder anordenbar ist, zu erden. Zweckmäßigerweise umfasst das Pulverstrahlgerät zumindest einen Befestigungs- und/oder Anordnungsbereich, welcher ausgelegt ist, mit einem Befestigungs- und/oder Anordnungsbereich einer Pulverkammer derart zusammenzuwirken, dass ein Arretieren/Befestigen und ein Erden der Pulverkammer bzw. insbesondere dessen Leitbereichs erfolgen kann. Die Ausbildung der Mittel zum Erden bzw. zum Potentialausgleich innerhalb des Pulverstrahlgeräts, beispielsweise in der Form entsprechender Leitungen, ist nicht kritisch und dem Fachmann durchaus bekannt, sodass auf mögliche Ausgestaltungen der Erdung des Pulverstrahlgeräts an dieser Stelle nicht weiter eingegangen wird. Als besonders vorteilhaft sei allerdings herausgestellt, dass das Pulverstrahlgerät derart ausgebildet ist dass beim Anordnen bzw. Befestigen oder Arretieren der Pulverkammer gleichzeitig die Erdung der Pulverkammer über das Pulverstrahlgerät ermöglicht wird. Im Übrigen gelten für das Pulverstrahlgerät sämtliche Vorteile und Merkmale, welche bereits in Bezug auf die Pulverkammer und den Verschluss genannt wurden, analog und entsprechend bzw. umgekehrt.

Weitere Vorteile und Merkmale ergeben sich aus der nachfolgenden Beschreibung einer Ausführungsform der erfindungsgemäßen Pulverkammer mit Bezug auf die beigefügte Figur.

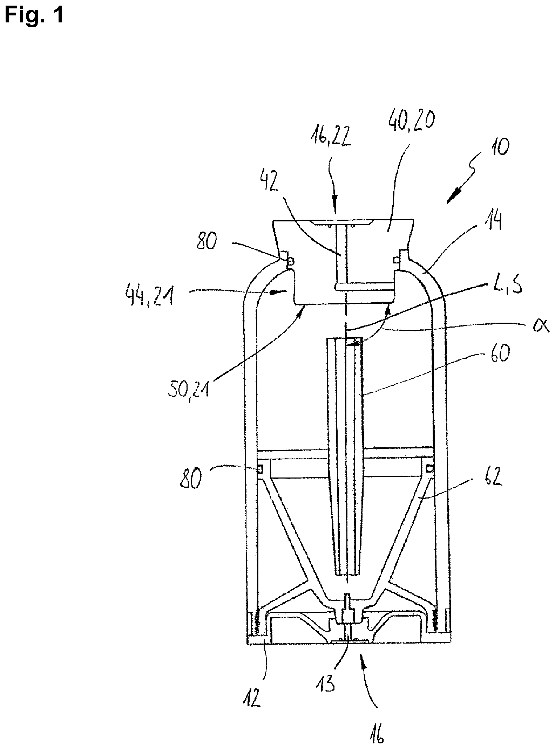

**Fig. 1** zeigt eine Ausführungsform der Erfindung in einer Schnittdarstellung, nämlich eine Pulverkammer 10, umfassend eine im Wesentlichen rotationssymmetrische Hülle bzw. Kammerwand 14. Diese weist eine Öffnung auf, in welcher ein Verschluss 40 angeordnet ist. Zu einer Unterseite hin ist die Pulverkammer 10 von einem Bodenelement 12 verschlossen, welches einen Einlass 13 für (Druck-)Luft aufweist. Entsprechend weist der Verschluss 40 einen Auslass 42 für ein Pulver-/Luftgemisch auf. Innerhalb der Pulverkammer 10 ist ein Einsatz 62 angeordnet, welcher der Aufbewahrung eines hier nicht gezeigten Pulvers dient. Die Pulverkammer 10 erstreckt sich entlang einer Hochachse/Längsachse L. Entlang der Längsachse L erstreckt sich wiederum ein Führungselement 60, welches ausgelegt ist, einen Strom eines Pulver-/Luftgemisches entlang einer Strömungsrichtung S zu führen. In einem Winkel α von etwa 90° relativ zur Strömungsrichtung S ist eine Prallfläche 50 orientiert. Auf diese hin wird das Pulver-/Luftgemisch durch das Führungselement 60 gerichtet.

Vorteilhafterweise ist der Verschluss 40 gleichzeitig als Leitbereich 20 ausgebildet, wobei der Verschluss 40 vorteilhafterweise aus Kunststoff gebildet ist und einen Kern aus einem elektrisch leitfähigen Material eine leitende Oberfläche und/oder eine Vielzahl elektrisch leitender Partikel aufweist. Insbesondere ist also die Prallfläche 50 als Kontaktfläche 21 des Leitbereichs 20 ausgebildet. Durch die in der Fig. 1 gezeigten Anordnung wird sichergestellt, dass möglichst alle Pulverteilchen den Leitbereich 20 bzw. die Kontaktfläche 21, welche gleichzeitig die Prallfläche 50 darstellt, berührt, wodurch ein Entladen möglichst vieler/aller Pulverteilchen sichergestellt wird. Der Verschluss 40 weist eine Seitenfläche 44 auf, welche je
nach Ausgestaltung ebenfalls als Kontaktfläche 21 ausgebildet sein kann. Im Bereich der Seitenfläche 44 ist auch der bereits erwähnte Auslass 42 angeordnet, welcher in der hier gezeigten Ausführungsform letztendlich durch zwei Bohrungen realisiert wird.

Die Pulverkammer 10 weist auch zwei Befestigungs- bzw. Anordnungsbereiche 16 auf, wobei ein unterer Anordnungs- bzw. Befestigungsbereich 16 durch das Bodenelement 12 gebildet wird, während ein oberer Anordnungsbefestigungs- bzw. Anordnungsbereich 16 durch den Verschluss 40 gebildet wird. In beiden Fällen werden die Befestigungs- bzw. Anordnungsbereiche 16 über entsprechende Vertiefungen geformt, in welcher eine kongruent ausgebildete Geometrie eines Pulverstrahlgeräts eingreifen kann. Mit Vorteil ist der Befestigungs- bzw. Anordnungsbereich 16 des Verschlusselements 40 gleichzeitig als Anschlussbereich 22 ausgebildet, welcher ebenfalls elektrisch leitfähig gestaltet ist. Insofern wird auf konstruktiv einfache Weise ein Potentialausgleich bzw. eine Erdung des Leitbereichs 20, insbesondere beim Arretieren oder Befestigen der Pulverkammer 10 in einem entsprechenden Pulverstrahlgerät, ermöglicht. Das Pulverstrahlgerät, welches hier nicht gezeigt ist, weist zweckmäßigerweise einen entsprechenden Arretiermechanismus auf, welcher die Pulverkammer 10 entlang der Längsachse L vorspannt, wodurch der Verschluss 40 derart auf die Hülle 14 gedrückt wird, dass diese sicher verschlossen ist. Der Verschluss 40 ist relativ zur Hülle 14 zweckmäßigerweise noch durch eine Dichtung 80, beispielsweise einen entsprechend ausgebildeten O-Ring, abgedichtet. Eine ähnliche Dichtung 80 kann auch beim Einsatz 62 zum Abdichten relativ der Hülle 14 verwendet werden.

### Bezugszeichenliste

- 10: Pulverkammer
- 12: Bodenelement
- 13: Einlass
- 14: Kammerwand, Hülle
- 16: Befestigungs-/Anordnungsbereich
- 20: Leitbereich
- 21: Kontaktfläche
- 22: Anschlussbereich
- 40: Verschluss
- 42: Auslass
- 44: Seitenfläche
- 50: Prallfläche
- 60: Führungselement
- 62: Einsatz
- 80: Dichtung
- S: Strömungsrichtung
- L: Längsachse
- α: Winkel

## Patentansprüche

1. Pulverkammer (10), insbesondere für ein oder von einem dentalen Pulverstrahlgerät,
umfassend zumindest einen Leitbereich (20), welcher elektrisch leitfähig ist, wobei der zumindest eine Leitbereich (20) eine Kontaktfläche (21) aufweist, welche innerhalb der Pulverkammer (10) ausgebildet ist,
wobei die Pulverkammer (10) eine Kammerwand (14) umfasst, welche aus einem nichtmetallischen Werkstoff gebildet ist und ein Abschnitt der Kammerwand (14) als Leitbereich (20) ausgebildet ist und/oder wobei die Pulverkammer (10) einen Verschluss (40) zum Verschließen der Pulverkammer (10) umfasst, wobei der Verschluss (40) als Leitbereich (20) ausgebildet ist.

2. Pulverkammer (10) nach Anspruch 1,
wobei die Kontaktfläche (21) einen Oberflächenwiderstand von 10¹² Ω oder weniger aufweist.

3. Pulverkammer (10) nach Anspruch 1 oder 2,
wobei der Leitbereich (20) einen Anschlussbereich (22) umfasst, welcher ausgelegt ist, den Leitbereich (20) zu erden.

4. Pulverkammer (10) nach einem der vorhergehenden Ansprüche,
wobei der Verschluss (40) aus Kunststoff gebildet ist, und
wobei der Verschluss (40) einen Kern aus einem elektrisch leitfähigen Material, eine elektrisch leitende Oberfläche und/oder eine Vielzahl elektrisch leitender Partikel aufweist.

5. Pulverkammer (10) nach einem der vorhergehenden Ansprüche, umfassend eine Prallfläche (50), welche ausgelegt ist, einen Pulverstrahl innerhalb der Pulverkammer (10) ab- und/oder umzulenken, wobei die Prallfläche (50) bevorzugt als Kontaktfläche (21) ausgebildet ist.

6. Pulverkammer (10) nach Anspruch 5,
wobei der Verschluss (40) die Prallfläche (50) aufweist.

7. Pulverkammer (10) nach einem der vorhergehenden Ansprüche, umfassend ein Führungselement (60), insbesondere ein Venturirohr, wobei das Führungselement (60) ausgelegt ist, einen Pulverstrom entlang einer Strömungsrichtung (S) in Richtung der Prallfläche (50) zu leiten.

8. Pulverkammer (10) nach einem der vorhergehenden Ansprüche, umfassend zumindest einen Befestigungs- und/oder Anordnungsbereich (16), welcher ausgelegt ist, die Pulverkammer (10) zu befestigen und/oder zu arretieren und/oder an einem anderen Bauteil anzuordnen,
wobei der Leitbereich (20) bevorzugt den Befestigungs- und/oder Anordnungsbereich (16) umfasst.

9. Pulverkammer (10) nach Anspruch 10,
wobei der Verschluss (40) den Befestigungs- und/oder Anordnungsbereich (16) umfasst bzw. als Befestigungs- und/oder Anordnungsbereich (16) ausgebildet ist.

## Claims

1. A powder chamber (10), in particular for or of a dental powder jet device, comprising at least one conductive region (20) which is electrically conductive, said at least one conductive region (20) having a contact surface (21) which is formed within the powder chamber (10),
wherein the powder chamber (10) comprises a chamber wall (14) which is formed of a non-metallic material and a portion of the chamber wall (14) is formed as a conductive region (20) and/or
wherein the powder chamber (10) comprises a closure (40) for closing the powder chamber (10), wherein the closure (40) is formed as a conductive region (20).

2. The powder chamber (10) according to claim 1,
wherein the contact surface (21) has a surface resistance of 10¹² Ω or less.

3. The powder chamber (10) according to claim 1 or 2,
wherein the conductive region (20) comprises a connection region (22) which is configured to ground the conductive region (20).

4. The powder chamber (10) according to one of the preceding claims, wherein the closure (40) is formed of plastic material, and
wherein the closure (40) comprises a core of an electrically conductive material, an electrically conductive surface and/or a plurality of electrically conductive particles.

5. The powder chamber (10) according to one of the preceding claims, comprising an impact surface (50) which is configured to deflect and/or redirect a powder jet within the powder chamber (10), the impact surface (50) preferably being configured as contact surface (21).

6. The powder chamber (10) according to claim 5,
wherein the closure (40) comprises the impact surface (50).

7. The powder chamber (10) according to one of the preceding claims, comprising a guide element (60), in particular a Venturi tube,
wherein the guide element (60) is configured to guide a powder stream along a flow direction (S) towards the impact surface (50).

8. The powder chamber (10) according to one of the preceding claims, comprising at least one fastening and/or arrangement region (16),
which is configured to fasten and/or to lock the powder chamber (10) and/or to arrange it on another component,
wherein the conductive region (20) preferably comprises the fastening and/or arrangement region (16).

9. The powder chamber (10) according to claim 10,
wherein the closure (40) comprises the fastening and/or arrangement region (16) or is formed as a fastening and/or arrangement region (16).

## Revendications

1. Chambre à poudre (10), en particulier pour un ou d'un appareil de pulvérisation de poudre à usage dentaire,
incluant au moins une zone conductrice (20), qui est capable de conduire l'électricité, ladite au moins une zone conductrice (20) présentant une surface de contact (21) qui est réalisée à l'intérieur de la chambre à poudre (10),
dans laquelle la chambre à poudre (10) inclut une paroi de chambre (14), qui est formée à partir d'un matériau non métallique et une section de la paroi de chambre (14) étant réalisé comme une zone conductrice (20), et/ou
dans laquelle la chambre à poudre (10) inclut un obturateur (40) pour obturer la chambre à poudre (10), ledit obturateur (40) étant réalisé comme une zone conductrice (20).

2. Chambre à poudre (10) selon la revendication 1,
dans laquelle la surface de contact (21) présente une résistance surfacique de 10¹² Ω ou moins.

3. Chambre à poudre (10) selon la revendication 1 ou 2,
dans laquelle la zone conductrice (20) inclut une zone de raccordement (22) qui est conçue pour mettre la zone conductrice (20) à la terre.

4. Chambre à poudre (10) selon l'une des revendications précédentes,
dans laquelle l'obturateur (40) est réalisé en matière plastique, et
dans laquelle l'obturateur (40) comprend un noyau en un matériau capable de conduire l'électricité, une surface conductrice de l'électricité et/ou une pluralité de particules conductrices de l'électricité.

5. Chambre à poudre (10) selon l'une des revendications précédentes, incluant une surface d'impact (50) qui est conçue pour dévier et/ou pour renvoyer un jet de poudre à l'intérieur de la chambre à poudre (10), dans laquelle la surface d'impact (55) est réalisée de préférence à titre de surface de contact (21).

6. Chambre à poudre (10) selon la revendication 5,
dans laquelle l'obturateur (40) comporte la surface d'impact (50).

7. Chambre à poudre (10) selon l'une des revendications précédentes, incluant un élément de guidage (60), en particulier un tube Venturi, dans laquelle l'élément de guidage (60) est conçu pour mener un flux de poudre le long d'une direction d'écoulement (S) en direction de la surface d'impact (50).

8. Chambre à poudre (10) selon l'une des revendications précédentes, incluant au moins une zone de fixation et/ou d'agencement (16), qui est conçue pour fixer et/ou pour arrêter la chambre à poudre (10) et/ou pour l'agencer la chambre à poudre (10) sur un autre composant,
dans laquelle la zone conductrice (20) inclut de préférence la zone de fixation et/ou d'agencement (16).

9. Chambre à poudre (10) selon la revendication 8,
dans laquelle l'obturateur (40) inclut la zone de fixation et/ou d'agencement (16), ou est réalisé à titre de zone de fixation et/ou d'agencement (16).
